# EUROPÄISCHE PATENTSCHRIFT

(11) **EP 0 995 903 B1**
(45) Veröffentlichungstag und Bekanntmachung des Hinweises auf die Patenterteilung: **26.03.2008**
(21) Anmeldenummer: 99810840.1
(22) Anmeldetag: 21.09.1999
(51) Int. Cl.: F02M 63/00, F02D 19/12, F02M 43/00

(54) **Vorrichtung zum Einspritzen von Flüssigkeiten in einen Zylinder einer Dieselbrennkraftmaschine und Dieselbrennkraftmaschine**
Device for injecting liquids into a cylinder of a diesel engine and diesel engine
Dispositif d'injection de liquide dans un cylindre d' un moteur Diesel et moteur Diesel

(30) Priorität: 20.10.1998 EP 98811046
(43) Veröffentlichungstag der Anmeldung: 26.04.2000
(73) Patentinhaber: Wärtsilä Schweiz AG, 8401 Winterthur (CH)
(72) Erfinder: Yildirim, Turhan, 8408 Winterthur (CH)
(74) Vertreter: Sulzer Management AG

(56) Entgegenhaltungen:
- DE-A- 19 706 469
- GB-A- 2 310 030
- US-A- 5 213 084
- PATENT ABSTRACTS OF JAPAN vol. 007, no. 199 (M-240), 3. September 1983 (1983-09-03) & JP 58 098655 A (KAWASAKI JUKOGYO KK), 11. Juni 1983 (1983-06-11)
- PATENT ABSTRACTS OF JAPAN vol. 007, no. 211 (M-243), 17. September 1983 (1983-09-17) & JP 58 107869 A (KAWASAKI JUKOGYO KK), 27. Juni 1983 (1983-06-27)

## Beschreibung

Die Erfindung betrifft eine Vorrichtung zum Einspritzen von Flüssigkeiten in einen Zylinder einer Dieselbrennkraftmaschine, insbesondere eines Grossdieselmotors, gemäss dem Oberbegriff des unabhängigen Anspruchs 1. Die Erfindung betrifft ferner eine Dieselbrennkraftmaschine, insbesondere einen Grossdieselmotor mit einer solchen Vorrichtung.

Insbesondere bei Grossdieselmotoren, wie sie beispielsweise zum Antreiben von Schiffen verwendet werden, ist es eine bekannte und effiziente Massnahme, ausser dem Brennstoff auch Wasser in den Brennraum der Zylinder einzuspritzen, um dadurch wirkungsvoll die Emission von umweltbelastenden Stickstoffoxiden (NOx) zu reduzieren. Dabei ist es möglich, das Wasser getrennt vom Brennstoff, z. B. während eines Teils des Kompressionshubs des Kolbens im Zylinder, einzuspritzen (direkte Wassereinspritzung) oder zunächst eine Emulsion aus Wasser und Brennstoff herzustellen und diese in den Brennraum einzuspritzen.

Vor allem bei längsgespülten Zweitakt-Grossdieselmotoren ist es üblich, an jedem Zylinder mehrere, z. B. drei, Brennstoffeinspritzdüsen vorzusehen, die um das zentral im Zylinderdeckel angeordnete Auslassventil verteilt sind. Falls ein solcher Motor mit direkter Wassereinspritzung betrieben wird, sind normalerweise gleich viele Wassereinspritzdüsen im Zylinderdeckel vorgesehen wie Brennstoffeinspritzdüsen, um eine möglichst gleichmässige Verteilung des Wassers im Zylinder zu erreichen und um die Flamme gezielt zu kühlen, damit die Spitzentemperaturen gesenkt werden.

Zur Steuerung der Einspritzung - sei es Wasser oder Brennstoff - ist es bekannt, für jeden Zylinder eine entsprechende Einspritzpumpe vorzusehen, die mit den Einspritzdüsen verbunden ist und die von einem Nocken auf der Steuerwelle betätigt wird, sodass die Einspritzung im gewünschten Zeitraum, bezogen auf den Arbeitstakt, erfolgt.

Andererseits ist es beispielweise aus der DE19706469 A1 bekannt, die Einspritzung nach dem Common-Rail-Prinzip durchzuführen. Die einzuspritzende Flüssigkeit, z. B. Wasser oder Brennstoff, wird dabei von einer Hochdruckpumpe in einen Hochdruckspeicher gefördert, der mit sämtlichen Einspritzdüsen aller Zylinder verbunden ist. Der Druck der Flüssigkeit im Hochdruckspeicher entspricht im wesentlichen dem Einspritzdruck. Mittels Steuerventilen oder sonstiger Steuereinrichtungen wird dann für den gewünschten Zeitraum, bezogen auf den Arbeitstakt des Motors, die Verbindung zwischen dem Hochdruckspeicher und den Einspritzdüsen des entsprechenden Zylinders geöffnet, sodass die Flüssigkeit in diesen Zylinder durch die Einspritzdüsen eingespritzt wird.

Die Betätigung der Steuerventile oder -einrichtungen erfolgt dabei hydraulisch mit einem speziellen, vom Brennstoff verschiedenen Steueröl, für das zumindest ein separater Kreislauf mit Versorgungs-, Pump- und Absperrvorrichtungen vorgesehen sein muss.

Der Erfindung liegt nun die Aufgabe zugrunde, eine einfachere und kostengünstigere Vorrichtung vorzuschlagen, mit der Flüssigkeiten, wie beispielsweise Wasser oder Brennstoff, in einen Zylinder einer Dieselbrennkraftmaschine, insbesondere eines Grossdieselmotors, eingespritzt werden können. Ferner ist es eine Aufgabe der Erfindung, eine Dieselbrennkraftmaschine, insbesondere einen Grossdieselmotor, mit einer einfacheren Einspritzvorrichtung für Wasser und/oder Brennstoff vorzuschlagen.

Die diese Aufgaben lösenden Gegenstände der Erfindung sind durch die Merkmale des unabhängigen Anspruchs der jeweiligen Kategorie gekennzeichnet.

Erfindungsgemäss wird also eine Vorrichtung zum Einspritzen von Flüssigkeiten in einen Zylinder einer Dieselbrennkraftmaschine, insbesondere eines Grossdieselmotors, vorgeschlagen mit mindestens einer Einspritzdüse, die mit einem Hochdruckspeicher für die einzuspritzende Flüssigkeit verbunden ist, mit einer Steuereinheit zum Öffnen und Schliessen der Verbindung zwischen dem Hochdruckspeicher und der Einspritzdüse sowie mit einer Vorsteuereinrichtung zum Vorsteuern der Steuereinheit, wobei die Vorsteuereinrichtung die Steuereinheit mittels der einzuspritzenden Flüssigkeit vorsteuert, und die Steuereinheit , ein Schiebersitzventil mit einem Ventilschieber umfasst, der mittels eines Schliesselements eine versorgungsleitung für die Verbindung zwischen dem Hochdruckspeicher und jeder Einspritzdüse öffnen und schliessen kann, wobei das Schliesselement als kombination eines Sitzventils und eines Schieberventils ausgebildet ist.

Durch die Massnahme, die Steuereinheit mittels der einzuspritzenden Flüssigkeit, also beispielsweise Wasser oder Brennstoff, vorzusteuern, bedarf es für die Vorsteuerung keines speziellen Steueröls mehr, wodurch sich insbesondere der apparative und der konstruktive Aufwand deutlich reduzieren lässt. Auch sind keine besonderen Vorkehrungen vonnöten, um unterschiedliche Medien wie Brennstoff und Steueröl gegeneinander abzudichten.

Vorzugsweise ist die Steuereinheit eigenmediumbetätigt, sodass die einzuspritzende Flüssigkeit die Steuereinheit betätigt. Somit sind nämlich für den Betrieb der gesamten Einspritzvorrichtung ausser der einzuspritzenden Flüssigkeit keine weiteren Betätigungs- oder Steuerflüssigkeiten mehr vonnöten, wodurch die Vorrichtung besonders einfach und kostengünstig wird.

Es ist ferner vorteilhaft, die Steuereinheit und die Einspritzdüse räumlich getrennt voneinander anzuordnen, also nicht als bauliche Einheit, weil es hierdurch möglich ist, einfache konventionelle Einspritzdüsen zu verwenden. Kompliziertere, mit eigenen, aktiv steuerbaren Betätigungselementen, wie beispielsweise Elektromagneten, versehene Einspritzdüsen können vermieden werden.

Die räumliche Trennung von Steuereinheit und Einspritzdüse ermöglicht auch die vorteilhafte Massnahme, mehrere Einspritzdüsen, die mit dem Hochdruckspeicher verbunden sind, mit nur einer Steuereinheit zu bedienen.

Dabei kann die Steuereinheit für alle Einspritzdüsen die Verbindung mit dem Hochdruckspeicher öffnen und schliessen.

Die Vorsteuereinrichtung zum Vorsteuern der Steuereinheit umfasst vorzugsweise ein magnetisch betätigbares Ventil.

Gemäss einem bevorzugten Ausführungsbeispiel umfasst die Steuereinheit ein Schiebersitzventil mit einem Ventilschieber, der eine Versorgungsleitung für die Verbindung zwischen dem Hochdruckspeicher und jeder Einspritzdüse öffnen und schliessen kann, denn durch das Schiebersitzventil kann mit wenig aufwendigen Massnahmen eine hohe Sicherheit gegen eine unerwünschte Dauereinspritzung in den Zylinder erzielt werden. Eine solche Massnahme besteht darin, einen Sensor zum Erfassen der Position des Ventilschiebers vorzusehen. Mit diesem kann dann auch die Einspritzdauer überwacht werden. Falls mittels dieses Sensors eine zu lange Öffnungszeit detektiert wird, kann beispielsweise die Versorgung des Hochdruckspeichers desaktiviert oder ein Notventil geschlossen werden, um eine schädliche Dauereinspritzung in den Zylinder zu verhindern.

Die erfindungsgemässe Dieselbrennkraftmaschine, insbesondere ein Grossdieselmotor, speziell ein Zweitakt-Grossdieselmotor mit Längsspülung, weist mindestens eine erfindungsgemässe Vorrichtung zum Einspritzen auf. Diese Vorrichtung kann zum Einspritzen des Brennstoffs, zum Einspritzen von Wasser oder auch zum Einspritzen einer Wasser-Brennstoff-Emulsion dienen.

Weitere vorteilhafte Massnahmen und bevorzugte Ausgestaltungen der Erfindungsgegenstände ergeben sich aus den abhängigen Ansprüchen.

Im Folgenden wird die Erfindung anhand von Ausführungsbeispielen und anhand der Zeichnung näher erläutert. In der schematischen, nicht massstäblichen Zeichnung zeigen:
- Fig. 1:: eine teilweise symbolische Darstellung eines ersten Ausführungsbeispiels der erfindungsgemässen Vorrichtung,
- Fig. 2:: eine symbolische Darstellung einer Variante des ersten Ausführungsbeispiels, und
- Fig. 3:: eine symbolische Darstellung eines zweiten Ausführungsbeispiels.

Bei der folgenden Beschreibung der erfindungsgemässen Vorrichtung zum Einspritzen von Flüssigkeiten in einen Zylinder einer Dieselbrennkraftmaschine anhand von Ausführungsbeispielen wird in erster Linie auf den Anwendungsfall Bezug genommen, dass mit der Vorrichtung Wasser in den Zylinder eines längsgespülten Zweitakt-Grossdieselmotors eingespritzt wird. Die Vorrichtung ist aber nicht auf solche Anwendungen beschränkt. Sie kann in sinngemäss gleicher Weise auch zum Einspritzen des Brennstoffs oder zum Einspritzen einer Wasser-Brennstoff-Emulsion dienen. Ferner ist die Erfindung nicht auf Zweitakt-Dieselmotoren beschränkt, sondern kann auch für andere Typen von Dieselbrennkraftmaschinen eingesetzt werden, wie beispielsweise solche, die nach dem Viertakt-Verfahren arbeiten.

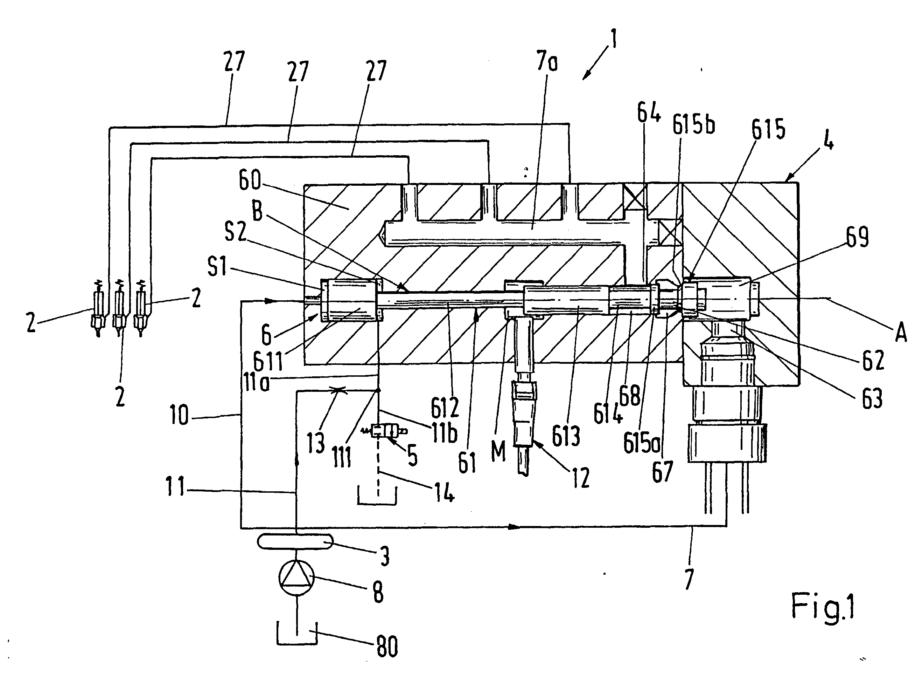

Fig. 1 zeigt in einer teilweise symbolischen Darstellung ein erstes Ausführungsbeispiel der erfindungsgemässen Vorrichtung, die gesamthaft mit dem Bezugszeichen 1 bezeichnet ist. Bei diesem Ausführungsbeispiel sind drei Einspritzdüsen 2 vorgesehen, die alle im Zylinderdeckel (nicht dargestellt) des gleichen Zylinders eines längsgespülten Zweitakt-Grossdieselmotors angeordnet sind. An jeder Einspritzdüse 2 endet eine Verbindungsleitung 27, durch welche die einzuspritzende Flüssigkeit - in diesem Fall Wasser - unter dem Einspritzdruck zu der entsprechenden Einspritzdüse gelangt. Die Verbindungsleitungen 27 münden alle in einen Teil 7a einer gemeinsame Versorgungsleitung 7, die mit einem Hochdruckspeicher 3 verbunden ist, in welchem sich die einzuspritzende Flüssigkeit befindet. Der Hochdruckspeicher 3 ist beispielsweise als hochdruckfeste Längsleitung ausgebildet, die sich entlang des Motors erstreckt, so wie dies bei dem Common-Rail-Verfahren üblich ist. Ferner ist eine Steuereinheit 4 vorgesehen, welche den Durchlass durch die Versorgungsleitung 7 und damit die Verbindung zwischen dem Hochdruckspeicher 3 und den Einspritzdüsen 2 durch den Teil 7a der Versorgungsleitung 7 öffnen und schliessen kann. Die Steuereinheit 4 steuert somit die Einspritzung. Die Steuereinheit 4 ist mittels einer Vorsteuereinrichtung, die hier ein magnetisch betätigbares Ventil 5 umfasst, in einer weiter hinten noch detailliert beschriebenen Weise vorsteuerbar. Eine Hochdruckpumpe 8 fördert die einzuspritzende Flüssigkeit in den Hochdruckspeicher 3. Im Falle von Wasser wird dieses mit beispielsweise etwa 400 bar in den Hochdruckspeicher 3 gefördert.

Die Steuereinheit 4 umfasst ein Schiebersitzventil 6 mit einem Gehäuse 60, in welchem eine Längsbohrung B zur Aufnahme eines Ventilschiebers 61 mit einer Längsachse A vorgesehen ist. Der Ventilschieber 61 umfasst die folgenden Teile, die in axialer Richtung, womit die Richtung der Längsachse A gemeint ist, aufeinanderfolgend angeordnet sind: Das eine axiale Ende des Ventilschiebers 61 bildet ein im wesentlichen zylinderförmiger Steuerkolben 611, an den sich ein im wesentlichen stabförmiger erster Schaft 612 anschliesst, dessen Durchmesser kleiner ist als der des Steuerkolbens 611. Der erste Schaft 612 geht in einen zweiten Schaft 613 über, der einen grösseren Durchmesser aufweist als der erste Schaft 612. An den zweiten Schaft 613 schliesst sich ein im wesentlichen stabförmiger dritter Schaft 614 an, dessen Durchmesser kleiner ist als der des zweiten Schafts 613. An den dritten Schaft 614 schliesst sich ein Schliesselement 615 an, welches das andere axiale Ende des Ventilschiebers 61 bildet. Das Schliesselement 615 umfasst ein scheibenförmiges Verschlussteil 615a, dessen Durchmesser im wesentlichen gleich gross ist wie der Durchmesser des zweiten Schafts 613, sowie eine im wesentlichen konisch ausgestaltete Sitzpartie 615b, die mit einem in der Längsbohrung B vorgesehenen Ventilsitz 62 nach dem Prinzip eines Sitzventils zusammenwirkt.

Im Bereich des Steuerkolbens 611 weist die Längsbohrung B einen Durchmesser auf, der so bemessen ist, dass der Steuerkolben 611 in der Längsbohrung B geführt ist und in axialer Richtung beweglich ist. Dieser Teil der Längsbohrung B ist bezüglich der Erstreckung in axialer Richtung länger als der Steuerkolben 611, sodass die beiden Stirnflächen des Steuerkolbens 611 mit der inneren Wandung des Gehäuses 60 jeweils eine Steuerkammer, nämlich eine erste Steuerkammer S1 und eine zweite Steuerkammer S2, begrenzen. Im Bereich des ersten Schafts 612 entspricht der Durchmesser der Längsbohrung B im wesentlichen dem Aussendurchmesser des ersten Schafts 612, sodass dieser in der Längsbohrung B geführt und bewegbar ist. Im Bereich des zweiten und dritten Schafts 613 und 614 weist die Längsbohrung B einen Durchmesser auf, der im wesentlichen dem Aussendurchmesser des zweiten Schafts 613 entspricht, sodass der zweite Schaft 613 in der Längsbohrung B geführt und bewegbar ist. Da der dritte Schaft 614 einen kleineren Durchmesser aufweist als der zweite Schaft 613, ist zwischen dem dritten Schaft 614 und der inneren Wandung des Gehäuses 60 ein Ringraum 68 ausgebildet. Dieser Teil der Längsbohrung B endet im Bereich des scheibenförmigen Verschlussteils 615a. Axial benachbart zum scheibenförmigen Verschlussteil 615a weist die Längsbohrung B eine Erweiterung auf, welche eine Ventilkammer 67 bildet, deren axiales Ende durch den Ventilsitz 62 gebildet wird. Auf der anderen Seite des Ventilsitzes 62 ist eine Vorkammer 69 vorgesehen, die einen Einlass 63 für die einzuspritzende Flüssigkeit aufweist. In der Vorkammer kann vorzugsweise noch eine nicht dargestellte Rückstellfeder vorgesehen sein, die auf den Ventilschieber 61 einwirkt und diesen gegen den Ventilsitz 62 vorspannt.

Im Übergangsbereich zwischen dem ersten Schaft 612 und dem zweiten Schaft 613 weist die Längsbohrung B eine Erweiterung auf, die eine Messkammer M für einen Sensor 12 zum Erfassen der Position des Ventilschiebers 61 bildet.

Die einerseits mit dem Hochdruckspeicher verbundene Versorgungsleitung 7 ist andererseits mit dem Einlass 63 des Schiebersitzventils 6 verbunden, sodass sich die einzuspritzende Flüssigkeit in der Vorkammer 69 im wesentlichen unter dem gleichen Druck befindet wie im Hochdruckspeicher 3, nämlich dem Einspritzdruck. Der Ringraum 68 weist einen Auslass 64 auf, der in den Teil 7a der Versorgungsleitung für die Einspritzdüsen 2 mündet. Von diesem Teil 7a zweigen die drei Verbindungsleitungen 27 ab, die zu den Einspritzdüsen 2 führen.

Die erste Steuerkammer S1 ist über eine erste Steuerleitung 10 mit dem Hochdruckspeicher 3 verbunden, und die zweite Steuerkammer S2 ist über eine zweite Steuerleitung 11 mit dem Hochdruckspeicher 3 verbunden. Die zweite Steuerleitung 11 verzweigt sich vom Hochdruckspeicher 3 kommend an einem Verzweigungspunkt 111 in einen ersten Ast 11 a, der zur zweiten Steuerkammer S2 führt, und einen zweiten Ast 11b, der zu dem magnetisch betätigbaren Ventil 5 führt, mit dem der Durchlass zu einer Rückführleitung 14 geöffnet oder verschlossen werden kann. Stromaufwärts der Verzweigung 111 ist eine Drossel 13 vorgesehen, die als Verjüngung im Strömungsquerschnitt ausgebildet ist, sodass der Strömungsquerschnitt im Bereich der Drossel 13 kleiner ist als der Strömungsquerschnitt im zweiten Ast 11b der zweiten Steuerleitung.

Das magnetisch betätigbare Ventil 5 ist z. B. als elektromagnetisches Ventil - oder kurz gesagt - als Magnetventil 5 ausgestaltet, mit einer elektrisch ansteuerbaren Spule, die einen federbelasteten Ventilstössel im Falle ihrer Aktivierung aus einer Schliessstellung in eine Offenstellung bewegt. Das Magnetventil 5 wird mittels einer nicht dargestellten Versorgungs- und Ansteuereinheit in an sich bekannter Weise betätigt.

Die Einspritzdüsen 2 sind in an sich bekannter Weise als konventionelle Einspritzdüsen ausgestaltet, mit einer federbelasteten Düsennadel, die mit einem Nadelsitz zusammenwirkt. Ist der an der Einspritzdüse 2 anliegende Flüssigkeitsdruck grösser als die von der Feder erzeugte Vorspannung, mit welcher die Düsennadel in den Nadelsitz gedrückt wird (Öffnungsdruck), so wird die Düsennadel aus dem Nadelsitz gehoben und gibt den Durchlass zu Düsenlöchern frei, durch welche die Flüssigkeit in den Brennraum des Zylinders eingespritzt wird. Fällt der Flüssigkeitsdruck unter den Schliessdruck, so überwiegt die von der Feder erzeugte Vorspannung, die Düsennadel wird dichtend in den Nadelsitz gepresst und die Einspritzung ist beendet.

Falls die Dieselbrennkraftmaschine mit direkter Wassereinspritzung betrieben wird, ist es möglich, als Einspritzdüsen 2 sogenannte Tandemdüsen zu verwenden, bei denen zwei getrennte Einspritzkanäle mit jeweils zugehörigen Düsenlöchern vorgesehen sind, wobei der eine Einspritzkanal für die Wassereinspritzung verwendet wird und der andere Einspritzkanal für die Brennstoffeinspritzung. Natürlich ist es auch möglich, für die Wassereinspritzung und die Brennstoffeinspritzung jeweils getrennte Einspritzdüsen zu verwenden.

Die Einspritzung des Wassers wird durch die Steuereinheit 4 gesteuert, welche durch die Vorsteuereinrichtung, die hier das Magnetventil 5 umfasst, vorgesteuert wird. Im Folgenden wird diese Funktionsweise der erfindungsgemässen Vorrichtung anhand des ersten Ausführungsbeispiels näher erläutert. Die Hochdruckpumpe 8 bringt das einzuspritzende Wasser auf den Einspritzdruck und fördert es in den Hochdruckspeicher 3. Von dort gelangt das Wasser durch die Versorgungsleitung 7 und den Einlass 63 in die Vorkammer 69 des Schiebersitzventils 6, wo es sich ebenfalls unter dem Einspritzdruck befindet. Solange keine Einspritzung erfolgen soll, befindet sich das Schiebersitzventil 6 in seiner Schliessstellung, sodass die Versorgungsleitung 7 verschlossen ist. In dieser Schliessstellung verschliesst das Schliesselement 615 des Ventilschiebers 61 die Verbindung zwischen dem Teil 7a der Versorgungsleitung und dem stromaufwärts des Schiebersitzventils 6 gelegenen Teil der Versorgunsleitung 7. Die Schliessfunktion des Schliesselements 615 ist dabei zweifach. Zum einen wird die Sitzpartie 615b nach dem Prinzip eines Sitzventils in den Ventilsitz 62 gedrückt, zum anderen verschliesst das scheibenförmige Verschlussteil 615a die Verbindung zwischen der Ventilkammer 67 und dem Ringraum 68 nach dem Prinzip eines Schieberventils. Das Magnetventil 5 befindet sich ebenfalls in seiner Schliessstellung, das heisst die Verbindung zwischen dem zweiten Ast 11b und der Rückführleitung 14 ist verschlossen. Da die zweite Steuerkammer S2 über die zweite Steuerleitung 11 und deren ersten Ast 11 a mit dem Hochdruckspeicher 3 verbunden ist, befindet sich die einzuspritzende Flüssigkeit auch im zweiten Steuerkammer S2 unter dem Einspritzdruck. Aufgrund der ersten Steuerleitung 10 herrscht auch in der ersten Steuerkammer S1 der Einspritzdruck. Folglich herrscht in den beiden Steuerkammern S1,S2 und in der Vorkammer 69 jeweils der gleiche Druck. Der Durchmesser des Steuerkolben 611, der Durchmesser des ersten Schafts 612 und der Durchmesser desjenigen Endes des Ventilschiebers 61, das in die Vorkammer 69 hineinreicht, sind so aufeinander abgestimmt, dass die Summe der Kräfte, welche die Flüsigkeit zum einen in der Vorkammer 69 auf das Schliesselement 615 des Ventilschiebers 61 und zum anderen in der zweiten Steuerkammer S2 auf den Steuerkolben 611 ausübt, grösser ist als die Kraft, welche die Flüssigkeit in der ersten Steuerkammer S1 auf den Steuerkolben 611 ausübt. Folglich wird die Sitzpartie 615b dichtend in den Ventilsitz 62 gedrückt, sodass keine Flüssigkeit in die Verbindungsleitungen 27 gelangen kann.

Soll nun die Einspritzung beginnen, so wird mittels der Versorgungs- und Ansteuereinheit das Magnetventil 5 aus seiner Schliessstellung in die Offenstellung gebracht, wodurch die Verbindung zwischen dem zweiten Ast 11b der zweiten Steuerleitung 11 und der Rückführleitung 14 geöffnet wird. Aufgrund des durch die Drossel 13 reduzierten Strömungsquerschnitts stromaufwärts der Verzweigung 111 strömt Flüssigkeit aus der zweiten Steuerkammer S2 durch den ersten und den zweiten Ast 11a,11b in die Rückführleitung 14, wodurch die zweite Steuerkammer S2 und damit die sie begrenzende Stirnfläche des Steuerkolbens 611 entlastet wird. Folglich herrscht in der zweiten Steuerkammer S2 nun ein im Vergleich zur ersten Steuerkammer S1 und zur Vorkammer 69 reduzierter Druck. Dadurch ändern sich die von der Flüssigkeit auf den Ventilschieber 61 ausgeübten Kräfte derart, dass dieser in seine Offenstellung - darstellungsgemäss nach rechts - bewegt wird, das heisst die von der Flüssigkeit druckbeaufschlagten Flächen sind so aufeinander.abgestimmt, dass die Kraft, welche die Flüssigkeit in der ersten Steuerkammer S1 auf den Steuerkolben 611 ausübt, grösser ist als die Summe der Kräfte, welche die Flüssigkeit in der Vorkammer 69 und in der entlasteten zweiten Steuerkammer S2 auf den Ventilschieber 61 ausübt.

Bei der Öffnungsbewegung wird zunächst die Sitzpartie 615b des Schliesselements 615 aus dem Ventilsitz 62 gehoben, sodass die Flüssigkeit aus der Vorkammer 69 in die Ventilkammer 67 strömen kann. Dabei verschliesst aber zunächst das scheibenförmige Verschlussteil 615a noch den Durchgang zum Ringraum 68. Erst wenn die Öffnungsbewegung des Ventilschiebers 61 so weit fortgeschritten ist, dass sich dieses Verschlussteil 615a im wesentlichen vollständig in der Ventilkammer 67 befindet ist der Durchgang zum Ringraum 68 frei. Nun beginnt die Einspritzung. Die Flüssigkeit strömt aus der Ventilkammer 67 in den Ringraum 68, von dort durch den Auslass 64 in den Teil 7a der Versorgungsleitung und dann durch die Verbindungsleitungen 27 zu den Einspritzdüsen 2, durch welche die Flüssigkeit in den Zylinder eingespritzt wird.

Zum Beenden der Einspritzung wird das Magnetventil 5 geschlossen. Dadurch strömt die Flüssigkeit wieder durch die zweite Steuerleitung 11 und deren ersten Ast 11a in den zweiten Steuerraum S2, sodass sich in diesem wieder der Einspritzdruck aufbaut. Dadurch wird der Ventilschieber 61 wieder in seine Schliessstellung bewegt, also darstellungsgemäss nach links. Das Verschlussteil 615a verschliesst den Durchgang zwischen der Ventilkammer 67 und dem Ringraum 68 und die Sitzpartie 615b wird wieder dichtend in den Ventilsitz 62 gedrückt. Folglich kann keine weitere Flüssigkeit mehr in die Verbindungsleitungen 27 strömen, sodass dort der Flüssigkeitsdruck unter den Schliessdruck der Einspritzdüsen 2 fällt. Die Einspritzung ist beendet.

Bei der erfindungsgemässen Vorrichtung wird also die Steuereinheit 4, welche die Einspritzung steuert, mittels der einzuspritzenden Flüssigkeit vorgesteuert, bei dem hier beschriebenen Ausführungsbeispiel nämlich mit Hilfe des Magnetventils 5 und der beiden Steuerleitungen 10,11. Somit sind für die Vorsteuerung keine separaten Steuerflüssigkeiten, wie beispielsweise Steueröle, und folglich auch keine weiteren ölhydraulischen Kreisläufe mit zugehörigen Pumpen, Ventilen usw. vonnöten, wodurch die erfindungsgemässe Vorrichtung besonders einfach und kostengünstig ist.

Bei dem hier beschriebenen Ausführungsbeispiel ist zudem das Schiebersitzventil 6 eigenmediumbetätigt, das heisst, das Öffnen und Schliessen des Schiebersitzventils 6 erfolgt mittels der einzuspritzenden Flüssigkeit selbst. Somit sind für die gesamte Steuerung der Einspritzung ausser der einzuspritzenden Flüssigkeit keine weiteren Betätigungs- oder Steuerflüssigkeiten, wie beispielsweise spezielle Steueröle, notwendig.

Wie bereits erwähnt, kann in der Vorkammer 69 noch eine Rückstellfeder vorgesehen sein, welche auf den Ventilschieber 61 einwirkt und diesen gegen den Ventilsitz 62 vorspannt. Diese Massnahme ist vorteilhaft, weil sich dadurch der Ventilschieber 61 auch dann in einer definierten Position befindet, nämlich seiner Schliessstellung, wenn die Vorrichtung noch nicht unter Druck steht, also beispielsweise ausgeschaltet ist.

Besonders vorteilhaft ist ferner, dass sich insbesondere aufgrund des Schiebersitzventils 6 mit einfachen Massnahmen eine hohe Sicherheit gegen eine unerwünschte und schädliche Dauereinspritzung in den Zylinder erzielen lässt. Eine solche Dauereinspritzung könnte beispielsweise auftreten, wenn der Ventilschieber 61 beim Öffnen oder Schliessen nach einem Teil seiner Hubbewegung stecken bleibt. Bei dem ersten Ausführungsbeispiel ist deshalb der Sensor 12 vorgesehen, der in die Messkammer M des Schiebersitzventils 6 hineinragt. Dieser Sensor 12 ist mit einer nicht dargestellten Überwachungs- und Kontrolleinheit verbunden und überwacht, vorzugsweise berührungsfrei, die Position des Ventilschiebers 61 sowohl bei dessen Öffnungsbewegung als auch bei dessen Schliessbewegung. Der Sensor 12 kann beispielsweise als Näherungs- oder Abstandssensor ausgestaltet sein, der die Lage des Übergangsbereichs zwischen dem ersten Schaft 612 und dem zweiten Schaft 613 detektiert und an die Überwachungs- und Kontrolleinheit übermittelt. Als Sensor 12 sind alle an sich bekannten Sensoren geeignet, mit denen die Position des Ventilschiebers 61 erfassbar ist, beispielsweise magnetische, induktive oder optische Sensoren. Auch kann auf dem Ventilschieber 61 eine Markierung vorgesehen sein, die mittels des Sensors 12 detektierbar ist.

Bei der Öffnungsbewegung des Ventilschiebers 61 wird das Schiebersitzventil 6 in der Überwachungs- und Kontrolleinheit als offen registriert, sobald der mittels des Sensors 12 detektierte Hub des Ventilschiebers 61 einen vorgebbaren Grenzwert, beispielsweise 0.4mm, überschreitet. Dieser Grenzwert wird so gewählt, dass die Sitzpartie 615b zwar schon aus dem Ventilsitz 62 herausgehoben ist, also die Strömungsverbindung zwischen der Vorkammer 69 und der Ventilkammer 67 schon geöffnet ist, aber das scheibenförmige Verschlussteil 615a aufgrund seiner Überdeckung die Verbindung zwischen der Ventilkammer 67 und dem Ringraum 68 noch verschliesst. Sobald das Schiebersitzventil 6 als geöffnet registriert ist, wird die Zeitdauer gemessen während der das Schiebersitzventil 6 geöffnet ist. Überschreitet diese Zeitdauer eine vorgebbare Grenze, die sich aus der gewünschten Einspritzdauer und einer Toleranzzeit zusammensetzt, so wird dieser zu lange Öffnungsdauer von der Überwachungs- und Kontrolleinheit als Fehler eingestuft. Als Gegenmassnahme zum Verhindern einer Dauereinspritzung kann die Überwachungs- und Kontrolleinheit dann beispielsweise die Hochdruckpumpe 8 abschalten oder ein Sicherheitsventil schliessen, das beispielsweise in der Versorgungsleitung 7 vorgesehen ist, oder ein Abströmventil öffnen, das in der Strömungsverbindung zwischen der Hochdruckpumpe 8 und den Einspritzdüsen 2 angeordnet ist.

Bleibt der Ventilschieber 6 beispielsweise bei seiner Öffnungsbewegung bereits nach einem Hub stecken, der kleiner ist als der erwähnte Grenzwert, ab dem das Schiebersitzventil als offen registriert wird, so wird ein möglicher Druckaufbau durch die Leckage über das scheibenförmige Verschlussteil 615a und durch das angepasste Laufspiel zwischen dem ersten und zweiten Schaft 612, 613 einerseits und der inneren Wandung der Längsbohrung B andererseits verhindert. Hierzu können am ersten und am zweite Schaft 612, 613 und am Steuerkolben 611 in an sich bekannter Weise Nuten vorgesehen sein, die sich in Umfangsrichtung um das entsprechende Teil herum erstrecken.

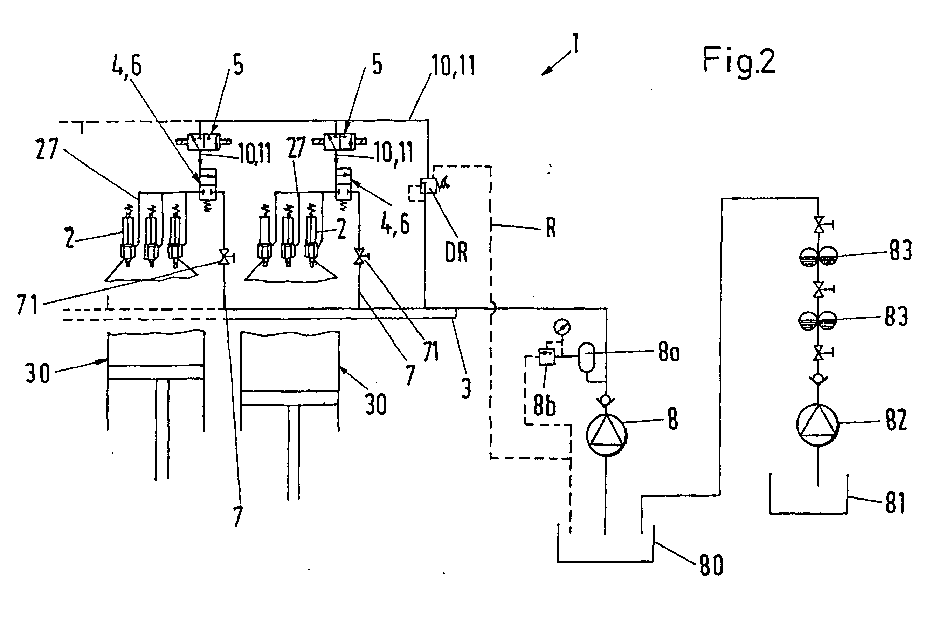

Fig. 2 zeigt in einer schematischen Darstellung eine Variante des ersten Ausführungsbeispiels implementiert in eine Dieselbrennkraftmaschine, insbesondere einen Grossdieselmotor. Es sind schematisch zwei Zylinder 30 angedeutet, von denen jeder in seinem Zylinderdeckel drei Einspritzdüsen 2 aufweist, mit denen Brennstoff oder Wasser oder eine Brennstoff-Wasser-Emulsion in die Zylinder 30 eingespritzt werden kann. Für jeden Zylinder 30 ist eine separate Steuereinheit 4 mit jeweils einem Schiebersitzventil 6 vorgesehen, welches jeweils mittels einer Vorsteuereinrichtung, die jeweils ein Magnetventil 5 umfasst, in bereits erläuterter Weise vorsteuerbar ist. Die beiden Steuerleitungen 10 und 11 (siehe Fig. 1) sind in Fig. 2 nur stark vereinfacht durch jeweils eine einzige Verbindungsleitung zwischen dem Magnetventil 5 und dem Schiebersitzventil 6 bzw. zwischen dem Magnetventil 5 und dem Hochdruckspeicher 3 angedeutet. Die Vorsteuerung des Schiebersitzventils 6 mittels der einzuspritzenden Flüssigkeit erfolgt jedoch für jedes Schiebersitzventil 6 in gleicher Weise wie es weiter vorne beschrieben ist.

Der Hochdruckspeicher 3 ist als druckfeste Längsleitung (Common Rail) ausgestaltet, die sich entlang des Motors erstreckt. Die Steuerleitung 10,11 für die Vorsteuerung ist mit dem Hochdruckspeicher verbunden. Für die Einspritzdüsen 2 jedes Zylinders 30 ist eine separate Versorgungsleitung 7 vorgesehen, die mit dem Hochdruckspeicher 3 verbunden ist und die mittels des jeweils zugehörigen Schiebersitzventils 6 geöffnet und geschlossen werden kann, wodurch die Einspritzung in den jeweiligen Zylinder 30 in bereits erläuterter Weise gesteuert wird. In jeder Versorgungsleitung 7 ist ein Absperrventil 71 vorgesehen, das entweder manuell oder von der nicht , dargestellten Überwachungs- und Kontrolleinheit betätigbar ist. Falls an einem der Zylinder 30 bzw. einer der zugeordneten Schiebersitzventile 6 ein Fehler auftritt so kann das zugehörige Absperrventil 71 verschlossen werden und die Vorrichtung zum Einspritzen anschliessend weiter betrieben werden, wobei dann natürlich in den Zylinder 30, bei dem der Fehler aufgetreten ist, keine Einspritzung mehr erfolgt.

Im Unterschied zum ersten Ausführungsbeispiel ist bei der hier beschriebenen Variante ein Druckreduzierventil DR in der Steuerleitung 10, 11 vorgesehen, um den Druck für die Vorsteuerung der Schiebersitzventile 6 bzw. der Steuereinheit 4 gegenüber dem Einspritzdruck zu reduzieren. Bei dieser Variante herrscht bei geschlossenem Schiebersitzventil 6 also sowohl in der ersten Steuerkammer S1 als auch in der zweiten Steuerkammer S2 ein im Vergleich zum Einspritzdruck reduzierter Druck. Es versteht sich, dass die für die Vorsteuerung druckbeaufschlagten Flächen, also insbesondere die Stirnflächen des Steuerkolbens 611 derart an den reduzierten Flüssigkeitsdruck zum Vorsteuern angepasst sind, dass die vorne erläuterte Funktionsweise des Schiebersitzventils 6 noch gewährleistet ist. Von dem Druckreduzierventil DR führt eine Rückführung R zu einem Vorratsbehälter 80 für die Hochdruckpumpe 8.

Den Druck für die Vorsteuerung gegenüber dem Einspritzdruck zu reduzieren, hat den Vorteil, dass die Vorrichtung zum Einspritzen praktisch mit beliebigem Einspritzdruck betrieben werden kann, weil der Druck für die Vorsteuerung im wesentlichen unabhängig vom Einspritzdruck ist. Dies ist insbesondere bei den sehr hohen Einspritzdrücken, beispielsweise 1000 bar, mit denen die Brennstoffeinspritzung bei Zweitakt-Grossdieselmotoren üblicherweise erfolgt, von Vorteil.

Ebenfalls dargestellt in Fig.2 ist eine Vorpumpe 82, welche die einzuspritzende Flüssigkeit aus einem Haupttank 81 über Filter 83 in den Vorratsbehälter 80 fördert, aus welchem die Hochdruckpumpe 8 die Flüssigkeit bezieht. Zwischen der Hochdruckpumpe 8 und dem Hochdruckspeicher 3 kann noch eine Abzweigung vorgesehen sein, die zu einem Speicher 8a führt, welcher zum Dämpfen von Druckstössen dient. Dieser Speicher 8a ist über ein Druckbegrenzungsventil 8b mit einer Rückführung in den Vorratsbehälter 80 verbunden.

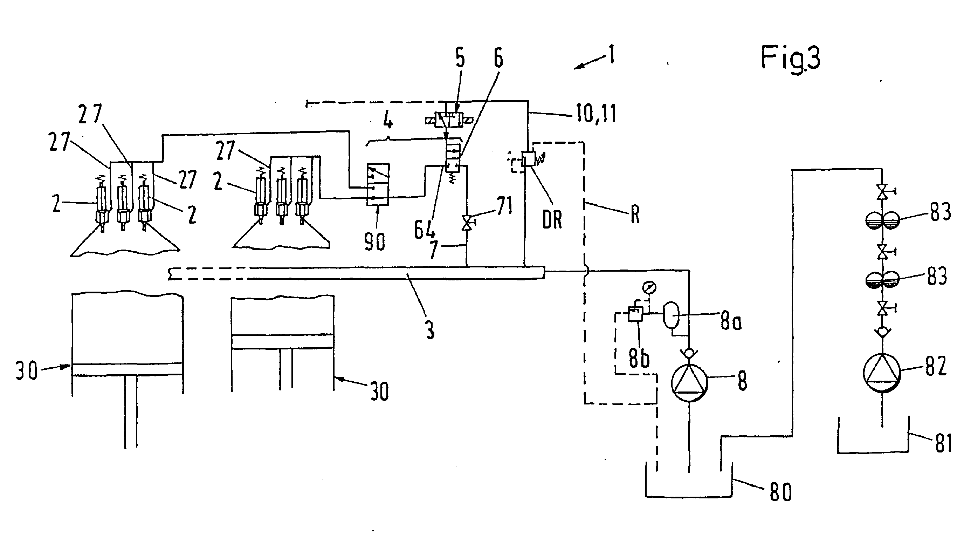

Fig. 3 zeigt ein zweites Ausführungsbeispiel der erfindungsgemässen Vorrichtung zum Einspritzen, wobei die Bezugszeichen die gleiche Bedeutung haben wie im Zusammenhang mit Fig. 1 und Fig. 2 erläutert. Der wesentliche Unterschied zum ersten Ausführungsbeispiel liegt darin, dass eine gemeinsame Steuereinheit 4 mit einem gemeinsamen Schiebersitzventil 6 für mehrere Einspritzdüsen 2 an unterschiedlichen Zylindern 30 vorgesehen ist. Ansonsten gelten die Erläuterungen bezüglich des ersten Ausführungsbeispiels in sinngemäss gleicher Weise auch für das zweite Ausführungsbeispiel.

Bei dem zweiten Ausführungsbeispiel ist eine gemeinsame Steuereinheit 4 vorgesehen, welche die Einspritzung in zwei Zylinder 30 steuert. Zur Vorsteuerung der Steuereinheit 4 ist wiederum ein Magnetventil 5 vorgesehen. Die Steuereinheit 4 umfasst ein gemeinsames Schiebersitzventil 6, das in bereits beschriebener Weise von dem Magnetventil 5 vorgesteuert wird. Die Steuereinheit 4 umfasst ferner ein dem Schiebersitzventil nachgeschaltetes Drei-Wege-Ventil 90, das je nach seiner Betriebsstellung den Auslass 64 des Schiebersitzventils 6 entweder mit den Einspritzdüsen 2 des einen oder mit den Einspritzdüsen 2 des anderen Zylinders 30 verbindet.

Durch diese Massnahme, die Einspritzung in mehrere Zylinder 30 mit nur einer gemeinsamen vorgesteuerten Steuereinheit 4 zu steuern, reduziert sich der apparative Aufwand, wodurch die Vorrichtung noch kostengünstiger wird. Auch ist die Ausfallwahrscheinlichkeit geringer, weil weniger Steuereinheiten vorhanden sind. Natürlich kann in sinngemäss gleicher Weise mittels einer gemeinsamen Steuereinheit 4 auch die Einspritzung in mehr als zwei unterschiedliche Zylinder 30 gesteuert werden.

Wie bereits erwähnt, ist die erfindungsgemässe Vorrichtung zum Einspritzen von Flüssigkeiten in analoger Weise für die Einspritzung von Wasser oder Brennstoff oder einer Wasser-Brennstoff-Emulsion geeignet. Auch ist es möglich bei einem Grossdieselmotor eine erfindungsgemässe Vorrichtung für die Wassereinspritzung und eine weitere erfindungsgemässe Vorrichtung für die Brennstoffeinspritzung vorzusehen.

## Patentansprüche

1. Vorrichtung zum Einspritzen von Flüssigkeiten in einen Zylinder einer Dieselbrennkraftmaschine, insbesondere eines Grossdieselmotors, mit mindestens einer Einspritzdüse (2), die mit einem Hochdruckspeicher (3) für die einzuspritzende Flüssigkeit verbunden ist, mit einer Steuereinheit (4,6) zum Öffnen und Schliessen der Verbindung zwischen dem Hochdruckspeicher (3) und der Einspritzdüse (2) sowie mit einer Vorsteuereinrichtung (5) zum Vorsteuern der Steuereinheit (4,6), wobei die Vorsteuereinrichtung (5) die Steuereinheit (4,6) mittels der einzuspritzenden Flüssigkeit vorsteuert, und die Steuereinheit (4,6) ein Schiebersitzventil (6) mit einem Ventilschieber (61) umfasst, der mittels eines Schliesselements (615) eine Versorgungsleitung (7) für die Verbindung zwischen dem Hochdruckspeicher (3) und jeder Einspritzdüse (2) öffnen und schliessen kann, **dadurch gekennzeichnet, dass** das Schliesselement (615) als Kombination eines Sitzventils und eines Schieberventils ausgebildet ist.

2. Vorrichtung nach Anspruch 1, bei welcher die Steuereinheit (4,6) eigenmediumbetätigt ist, sodass die einzuspritzende Flüssigkeit die Steuereinheit (4,6) betätigt.

3. Vorrichtung nach Anspruch 1 oder 2, bei welcher die Steuereinheit (4,6) und die Einspritzdüse (2) räumlich getrennt sind.

4. Vorrichtung nach einem der vorangehenden Ansprüche mit mehreren Einspritzdüsen (2), die mit dem Hochdruckspeicher (3) verbunden sind, wobei die Steuereinheit (4,6) für alle Einspritzdüsen (2) die Verbindung mit dem Hochdruckspeicher (3) öffnen und schliessen kann.

5. Vorrichtung nach einem der vorangehenden Ansprüche, bei welcher die Steuereinheit (4,6) und die Vorsteuereinrichtung (5) mit dem Hochdruckspeicher (3) verbunden sind.

6. Vorrichtung nach einem der vorangehenden Ansprüche, bei welcher die Vorsteuereinrichtung ein magnetisch betätigbares Ventil (5) umfasst.

7. Vorrichtung nach einem der vorangehenden Ansprüche, wobei ein Druckreduzierventil (DR) vorgesehen ist, um den Druck für die Vorsteuerung der Steuereinheit (4,6) zu reduzieren.

8. Vorrichtung nach Anspruch 1 mit einem Sensor (12) zum Erfassen der Position des Ventilschiebers (61), mit welchem Sensor (12) die Einspritzdauer überwachbar ist.

9. Dieselbrennkraftmaschine, insbesondere Grossdieselmotor, mit mindestens einer Vorrichtung zum Einspritzen gemäss einem der vorangehenden Ansprüche.

10. Dieselbrennkraftmaschine nach Anspruch 9, bei welcher für jeden Zylinder (30) eine separate Steuereinheit (4,6) mit einer Vorsteuereinrichtung (5) vorgesehen ist.

11. Dieselbrennkraftmaschine nach einem der Ansprüche 9 oder 10 mit mindestens einer gemeinsamen Steuereinheit (4,6) für mehrere Einspritzdüsen (2) an unterschiedlichen Zylindern (30).

## Claims

1. Apparatus for the injection of liquids into a cylinder of a diesel combustion engine, in particular of a large diesel engine, including at least one injection nozzle (2) which is connected to a high pressure reservoir (3) for the liquid to be injected, a control unit (4, 6) for the opening and closing of the connection between the high pressure reservoir (3) and the injection nozzle (2) and a pilot control device (5) for the pilot control of the control unit (4, 6), wherein the pilot control device (5) effects pilot control of the control unit (4, 6) by means of the liquid to be injected and the control unit (4, 6) includes a slide valve (6) with a valve slider (61) which, by means of a closing element (615), can open and close a supply line (7) for the connection between the high pressure reservoir and each injection nozzle (2), **characterised in that** the closing element (615) is formed as a combination of a seat valve and a slide valve.

2. Apparatus in accordance with claim 1 in which the control unit (4, 6) is actuated by its own medium so that the liquid to be injected actuates the control unit (4, 6).

3. Apparatus in accordance with claim 1 or claim 2 in which the control unit (4, 6) and the injection nozzle (2) are spatially separate.

4. Apparatus in accordance with one of the preceding claims comprising a plurality of injection nozzles (2) which are connected to the high pressure reservoir (3), with it being possible for the control unit (4, 6) to open and close the connection to the high pressure reservoir (3) for all injection nozzles (2).

5. Apparatus in accordance with one of the preceding claims in which the control unit (4, 6) and the pilot control device (5) are connected to the high pressure reservoir (3).

6. Apparatus in accordance with one of the preceding claims in which the pilot control device includes a magnetically actuatable valve (5).

7. Apparatus in accordance with one of the preceding claims, with a pressure reducing valve (DR) being provided in order to reduce the pressure for the pilot control of the control unit (4, 6).

8. Apparatus in accordance with claim 1 with a sensor (12) for the measurement of the position of the valve slider (61), with it being possible to monitor the injection duration by means of said sensor (12).

9. Diesel combustion engine, in particular a large diesel engine, including at least one injection apparatus in accordance with one of the preceding claims.

10. Diesel combustion engine in accordance with claim 9 in which a separate control unit (4, 6) with a pilot control device (5) is provided for each cylinder (30).

11. Diesel combustion engine in accordance with one of the claims 9 or 10 with at least one common control unit (4, 6) for a plurality of injection nozzles (2) at different cylinders (30).

## Revendications

1. Dispositif d'injection de liquides dans un cylindre d'un moteur Diesel, en particulier d'un grand moteur Diesel, avec au moins une buse d'injection (2) qui est reliée à un réservoir haute pression (3) pour le liquide à injecter, avec une unité de commande (4, 6) pour ouvrir et fermer la connexion entre le réservoir haute pression (3) et la buse d'injection (2) et avec une installation de précommande (5) pour précommander l'unité de commande (4, 6), où l'installation de précommande (5) précommande l'unité de commande (4, 6) au moyen du liquide à injecter, et l'unité de commande (4, 6) comprend une soupape à siège et à poussoir (6) avec un poussoir de soupape (61) apte à ouvrir et à fermer au moyen d'un élément de fermeture (615) un conduit d'alimentation (7) pour la connexion entre le réservoir haute pression (3) et chaque buse d'injection (2), **caractérisé en ce que** l'élément de fermeture (615) est réalisé comme une combinaison d'une soupape à siège et d'une soupape à poussoir.

2. Dispositif selon la revendication 1, où l'unité de commande (4, 6) est actionnée par son milieu propre, de sorte que le liquide à injecter actionne l'unité de commande (4, 6).

3. Dispositif selon la revendication 1 ou 2, où l'unité de commande (4, 6) et la buse d'injection (2) sont séparées spatialement.

4. Dispositif selon l'une des revendications précédentes avec plusieurs buses d'injection (2) qui sont reliées au réservoir haute pression (3), où l'unité de commande (4, 6) est apte à ouvrir et à fermer pour toutes les buses d'injection (2) la liaison avec le réservoir haute pression (3).

5. Dispositif selon l'une des revendications précédentes, où l'unité de commande (4, 6) et l'installation de précommande (5) sont reliées au réservoir de stockage haute pression (3).

6. Dispositif selon l'une des revendications précédentes, où l'unité de précommande comprend une soupape actionnable magnétiquement (5).

7. Dispositif selon l'une des revendications précédentes, où une soupape de réduction de pression (DR) est prévue, pour réduire la pression pour la précommande de l'unité de commande (4, 6).

8. Dispositif selon la revendication 1 avec un capteur (12) pour détecter la position du poussoir de soupape (61), capteur (12) au moyen duquel la durée d'injection peut être surveillée.

9. Moteur Diesel, en particulier grand moteur Diesel, avec au moins un dispositif d'injection selon l'une des revendications précédentes.

10. Moteur Diesel selon la revendication 9, où est prévue pour chaque cylindre (30) une unité de commande séparée (4, 6) avec une installation de précommande (5).

11. Moteur Diesel selon l'une des revendications 9 ou 10, avec au moins une unité de commande commune (4, 6) pour plusieurs buses d'injection (2) à des cylindres différents (30).
